# EUROPÄISCHE PATENTANMELDUNG

(11) **EP 4 342 281 A1**
(43) Veröffentlichungstag der Anmeldung: **27.03.2024**
(21) Anmeldenummer: 23186501.5
(22) Anmeldetag: 19.07.2023
(51) Int. Cl.: A01D 45/02

(54) **VORSATZGERÄT**

(30) Priorität: 22.09.2022 DE 102022124405
(71) Anmelder: CLAAS Selbstfahrende Erntemaschinen GmbH, 33428 Harsewinkel (DE)
(72) Erfinder: Bodi, Laszlo, Szolnok 5000 (HU); Ivanics, Peter, 5900 Orosháza (HU); Benes, Jason, Nebraska, 68462 (US); Herter, Felix, 33428 Harsewinkel (DE); Wagner, Thomas, 33803 Steinhagen (DE)
(74) Vertreter: CLAAS Gruppe

(57) **Zusammenfassung**

Die Erfindung betrifft ein Vorsatzgerät (1) zum Ernten von in Reihen stehendem Erntegut, umfassend mehrere nebeneinander angeordnete Pflückeinheiten (8), welche jeweils durch ein zweiteiliges Abdeckelement (13), welches eine vordere Abdeckspitze (4) und eine hintere Abdeckhaube (6) aufweist, zumindest abschnittsweise abgedeckt sind, wobei die hintere Abdeckhaube (6) eine zumindest abschnittsweise gestufte Außenoberfläche (17) zur Verbreiterung eines zwischen zwei benachbarten Abdeckhauben (6) ausgebildeten Kanals (11) aufweist, wobei sich die unterhalb einer Stufe (18) der Abdeckhaube (6) befindliche Gutleitfläche (19) kontinuierlich bis zu einem hinteren Ende (16) der Abdeckhaube (6) erstreckt.

## Beschreibung

Die Erfindung betrifft ein Vorsatzgerät zum Ernten von in Reihen stehendem Erntegut gemäß dem Oberbegriff des Anspruchs 1.

Vorsatzgeräte der eingangs genannten Art kommen zum Einsatz, um in Reihen stehendes, stängeliges Erntegut wie Mais, Sonnenblumen oder dergleichen zu ernten. Die Vorsatzgeräte weisen Erntegutaufnahme- und/oder Ernteguteinzugsvorrichtungen auf, die paarweise angeordnete Pflückwalzen umfassen, die jeweils einen Pflückspatz zwischen sich ausbilden. Das in Reihen mit bestimmten Abständen zueinander angeordnete stängelige Erntegut wird den an dem Erntevorsatz achsparallel zueinander angeordneten Pflückeinheiten zugeführt, welche sich im Wesentlichen parallel zu den Reihen mit Erntegut erstrecken. Zur präzisen und möglichst verlustfreien Zuführung des stängeligen Erntegutes, das heißt ohne Verluste der Fruchtstände beziehungsweise Spritzkornverluste, sind so genannte Abdeckspitzen und Abdeckhauben oberhalb der Pflückeinheiten angeordnet, welche diese abschnittsweise abdecken. In einer Betriebsstellung des Vorsatzgeräts sind die vorderen Abdeckspitzen im Wesentlichen fluchtend mit einer hinter jeweils einer Abdeckspitzen befindlichen Abdeckhaube angeordnet. Die vorderen Abdeckspitzen dienen dazu die in Reihen angeordneten Pflanzen hin zu den Pflückeinheiten zu leiten. Zwischen zwei benachbarten Abdeckhauben ist ein Kanal ausgebildet, durch den die Pflückeinheiten die Pflanzen hindurchführen. Die Früchte werden hier mittels Pflückerplatten von den Stängeln getrennt und die verbleibenden Früchte in den Kanälen hin zu einem hinter den Pflückeinheiten angeordneten Fördermittel geleitet. Üblicherweise weist die Oberfläche der Abdeckhaube eine glatte sowie konvexe Oberfläche auf. Das Erntegut wird in den Kanälen entlang dieser Oberfläche hin zu dem Fördermittel befördert.

Aus der DE 100 39 097 A1 ist ein derartiger Erntevorsatz bekannt. Nachteilig an derartigen Erntevorsätzen ist, dass insbesondere Erntegut mit großen Früchten mit einer erhöhten Feuchtigkeit zum anstauen in den Kanälen neigt.

Es ist deshalb Aufgabe der Erfindung, die beschriebenen Nachteile des Standes der Technik zu vermeiden und insbesondere den Gutfluss des Ernteguts in einem Vorsatzgerät zur Ernte von in Reihen stehenden Erntegut zu verbessern.

Diese Aufgabe wird erfindungsgemäß durch die kennzeichnenden Merkmale des Anspruchs 1 gelöst.

Gemäß dem Anspruch 1 wird ein Vorsatzgerät zum Ernten von in Reihen stehendem Erntegut vorgeschlagen, umfassend mehrere nebeneinander angeordnete Pflückeinheiten, welche jeweils durch ein zweiteiliges Abdeckelement, welches eine vordere Abdeckspitze und eine hintere Abdeckhaube aufweist, zumindest abschnittsweise abgedeckt sind, wobei die hintere Abdeckhaube eine zumindest abschnittsweise gestufte Außenoberfläche zur Verbreiterung eines zwischen zwei benachbarten Abdeckhauben ausgebildeten Kanals aufweist, wobei sich die unterhalb einer Stufe der Abdeckhaube befindliche Gutleitfläche kontinuierlich bis zu einem hinteren Ende der Abdeckhaube erstreckt.

Die Erfindung hat viele Vorteile. Durch die gestufte Oberfläche der Abdeckhaube wird ein größeres Volumen für den Gutfluss des Ernteguts hin zu einem hinter den Abdeckhauben befindlichen Querfördermittel zur Verfügung gestellt, da die unteren Gutleitflächen gegenüber einer ungestuften Abdeckhaube flacher ausgeführt sind und somit mehr freies Volumen zwischen zwei benachbarten Abdeckhauben für den Transport von Erntegut zur Verfügung steht. Die gestufte Ausführung wirkt einem Anstauen von Erntegut innerhalb des Kanals entgegen. Ferner wirkt die gestufte Ausführung ebenfalls einem Hochrutschen des Ernteguts entlang der Außenoberfläche entgegen, sodass das Erntegut in dem Kanal verbleibt und ein Ansammeln von Erntegutbestandteile auf der Abdeckhaube vermieden wird.

Gemäß einer vorteilhaften Weiterbildung ist vorgesehen, dass die Stufe der Abdeckhaube einen Steigungsabschnitt und einen sich an den Steigungsabschnitt in einem gemeinsamen Schnittpunkt anschließenden Längsabschnitt aufweist, wobei sich der Längsabschnitt in Längsrichtung der Abdeckhaube erstreckt. Die verwinkelte Ausführung der Stufe mit dem Längsabschnitt und Steigungsabschnitt gibt der Struktur der Abdeckhaube zusätzliche Formstabilität, sodass diese sich im Erntebetrieb weniger stark verformt.

Gemäß einer weiteren vorteilhaften Ausgestaltung ist vorgesehen, dass der Steigungsabschnitt und der Längsabschnitt in ihrem Schnittpunkt einen stumpfen Winkel ausbilden. Der Stumpfe Winkel ist zwischen dem Steigungsabschnitt und dem Längsabschnitt auf einer dem unteren Randabschnitt zugewandten Seite ausgebildet. Die sich ergebene Rippe gibt den Aufbau der Abdeckhaube eine besonders formstabile Struktur.

Eine vorteilhafte Ausgestaltung sieht vor, dass die Abdeckhaube ein hohlzylindrisches, nach unten offenes, von seitlichen Randabschnitten begrenztes Profil aufweist, wobei die Abdeckhaube an gegenüberliegenden Seiten jeweils eine Stufe aufweist, wobei die Stufen derart ausgebildet sind, dass die sich jeweils zwischen einer Stufe und einem Randabschnitt erstreckende Gutleitfläche flacher ausgeführt ist, als eine oberhalb der Stufen befindliche konvexe Gutleitfläche. Die flacher ausgeführten Gutleitflächen bewirken die Verbreiterung des Kanals, wobei die oberhalb der Stufen befindliche konvexe Gutleitfläche bewirkt, dass das Erntegut von dieser herab in den Kanal rutscht.

Eine weitere vorteilhafte Ausgestaltung sieht vor, dass die vordere Abdeckspitze eine abschnittsweise gestufte Außenoberfläche aufweist, wobei sich eine unterhalb der Stufe der Abdeckspitze befindliche Gutleitfläche kontinuierlich bis zu einem der Abdeckhaube zugewandten Ende der Abdeckspitze erstreckt. Die Ausgestaltung ist besonders vorteilhaft, da insbesondere liegendes stängeliges Erntegut aufgrund der Abstufung überwiegend entlang der oberhalb der Stufe befindlichen Gutleitfläche gleitet und somit weniger in Kontakt mit der Oberfläche der Abdeckspitze steht, sodass vermindert Reibung zwischen dem Erntegut und den Abdeckspitzen auftritt.

In besonders vorteilhafter Weise kann die Stufe der Abdeckspitze einen Steigungsabschnitt und einen sich an den Steigungsabschnitt in einem gemeinsamen Schnittpunkt anschließenden Längsabschnitt aufweisen, wobei sich der Längsabschnitt in Längsrichtung der Abdeckspitze erstreckt. Die verwinkelte Ausführung der Stufe mit dem Längsabschnitt und Steigungsabschnitt gibt der Struktur der Abdeckspitze zusätzliche Formstabilität, sodass diese sich im Erntebetrieb weniger stark verformt.

Ein besonders formstabiler Aufbau der Abdeckspitze ergibt sich, wenn der Steigungsabschnitt und der Längsabschnitt der an der Abdeckspitze befindlichen Stufe in ihrem Schnittpunkt einen spitzen Winkel ausbilden, wobei sich der spitze Winkel auf der dem unteren Randbereich der Abdeckspitze zugewandten Seite zwischen dem Steigungsabschnitt und dem Längsabschnitt befindet.

Zum Schutz der Außenoberfläche der Abdeckspitze ist es besonders vorteilhaft, wenn die Außenoberfläche der Abdeckspitze an ihren Randabschnitten zumindest ein, vorzugsweise zwei, flächige Verschleißelemente umfasst. Die Verschleißelemente können sich in einem hinteren, den Abdeckhauben zugewandten Bereich der Abdeckspitzen befinden, da diese im Erntebetrieb besonders stark belastet ist.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Darstellung eines Vorsatzgeräts zum Ernten von in Reihen stehendem Erntegut in einer Draufsicht;
- Figur 2: eine schematische Darstellung einer vorderen Abdeckspitze und einer hinteren Abdeckhaube in einer Draufsicht;
- Figur 3: eine schematische Darstellung einer vorderen Abdeckspitze und einer hinteren Abdeckhaube in einer perspektivischen Ansicht.

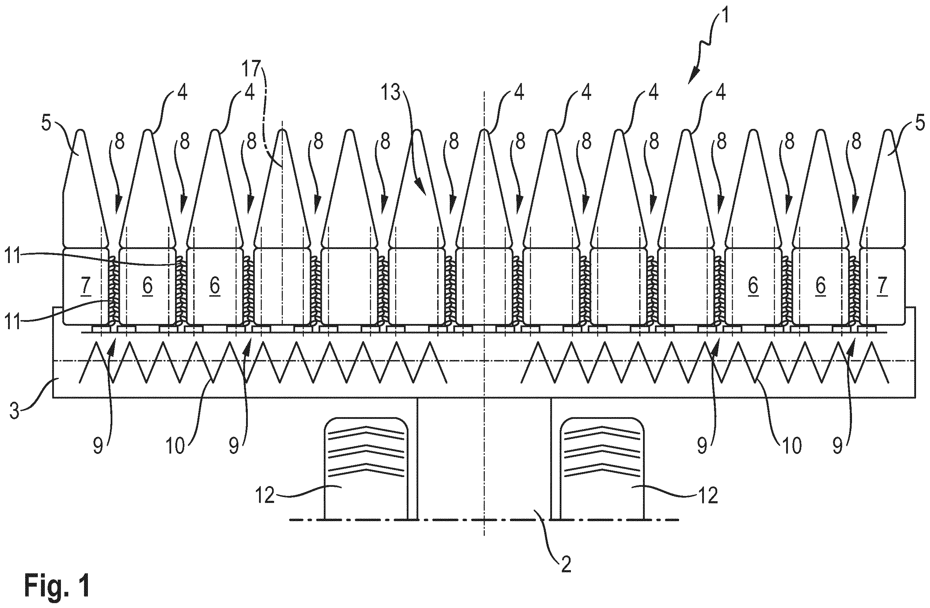

Die Darstellung in Fig. 1 zeigt eine schematische Darstellung eines Vorsatzgeräts 1 zum Ernten von in Reihen stehendem Erntegut in einer Draufsicht. Das Vorsatzgerät 1 kommt insbesondere zum Ernten von Mais oder dergleichen Körnerfrüchten zur Anwendung. Das Vorsatzgerät 1 stellt ein Pflückvorsatzgerät für einen Mähdrescher oder einen Feldhäcksler dar. Bei dem dargestellten Ausführungsbeispiel ist dem Vorsatzgerät 1 ein Schrägförderer 2 eines Mähdreschers nachgeordnet, der das Erntegut, beispielsweise Maiskolben, dem Bearbeitungsteil des über Räder 12 auf dem Boden abgestützten Mähdreschers oder Feldhäckslers zuführen kann. Derartige Vorsatzgeräte sind aus dem Stand der Technik bekannt.

Das Vorsatzgerät 1 umfasst einen Maschinenrahmen 3, mehrteilige, vorzugsweise zweiteilige Abdeckelemente 13, die aus vorderen Abdeckspitzen 4 sowie hinteren Abdeckhauben 6 bzw. äußeren Abteilern 5 und äußeren Teilerhauben 7 bestehen, nebeneinanderliegende Pflückeinheiten 8 mit paarweise angeordneten Pflückwalzen 9, die unterhalb der sie teilweise überdeckenden Abdeckhauben 6 bzw. äußeren Abdeckhauben 7 angeordnet sind, und hinter den Pflückeinheiten 8 liegende Querfördervorrichtungen, beispielsweise Querförderschnecken 10. Zur Abgabe des gepflückten Erntegutes an den Schrägförderer 2 des Mähdreschers oder Feldhäckslers weist der Maschinenrahmen 3 eine im Wesentlichen mittig angeordnete Öffnung auf. Zwischen zwei benachbarten Abdeckhauben 6 ist ein Kanal 11 ausgebildet, durch den die mittels der Pflückeinheiten 8 von den Stängeln getrennten Früchte hin zu den Querförderschnecken 10 geleitet werden.

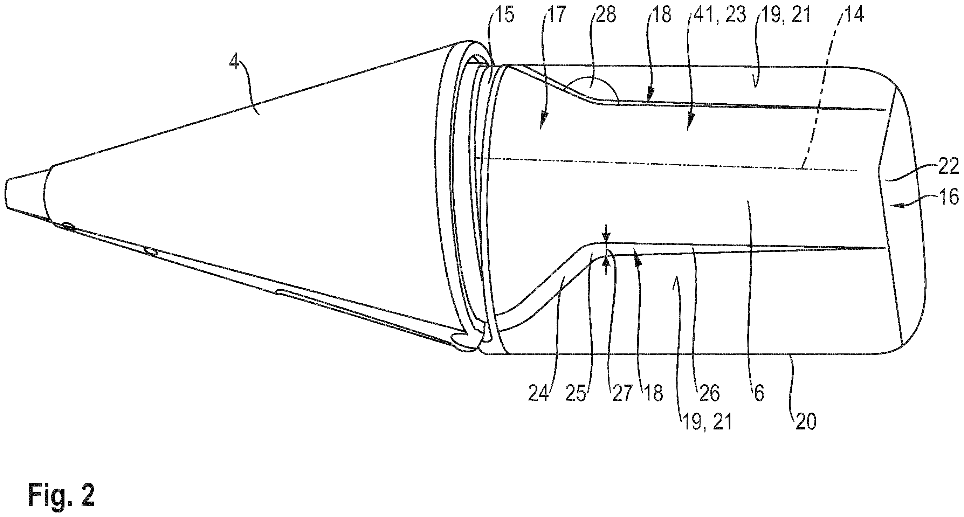

Fig. 2 zeigt exemplarisch eine vordere Abdeckspitze 4 mit einer hinter der Abdeckspitze 4 angeordneten hinteren Abdeckhaube 6. Die Abdeckspitze 4 und Abdeckhaube 6 sind fluchtend zueinander ausgerichtet. Die Abdeckhaube 6 ist als ein zur Längsachse 14 achsensymmetrisches nach unten offenes Hohlprofil ausgeführt. Die Abdeckhaube 6 weist ein bogenförmiges Profil auf, welches sich in Richtung der Längsachse 14 erstreckt. Das Ausmaß der Abdeckhaube 6 ist ausgehend von einem vorderen der Abdeckspitze 4 zugewandten Ende hin zu einem dem Maschinenrahmen 3 zugewandten hinteren Ende im Wesentlichen konstant.

Die hintere Abdeckhaube 6 weist eine abschnittsweise gestufte Außenoberfläche 17 zur Verbreiterung des zwischen zwei benachbarten Abdeckhauben 6 ausgebildeten Kanals 11 auf. Eine Stufe 18 bewirkt, dass eine untere Gutleitfläche 19 der Abdeckhaube 6 flacher ausgeführt ist. Hierdurch ergibt sich eine geringe Steigung der unteren Gutleitfläche 19, die sich ausgehend von den die Abdeckhaube 6 untenseitig begrenzenden Randabschnitt 20 hin zu der Stufe 18 erstreckt. Die Stufe 18 ist derart ausgebildet, sodass der Kanal 11 für den Transport von Erntegut ein vergrößertes Volumen zur Verfügung stellt. Mit anderen Worten ist die Stufe 18 derart ausgebildet, sodass diese einen verbesserten Gutfluss des Ernteguts in Richtung der Querförderschnecke 10 bewirkt. Die unterhalb der Stufe 18 befindliche Gutleitfläche 19 erstreckt sich kontinuierlich mit einer glatten Oberfläche 21 bis zu dem hinteren, dem Maschinenrahmen 3 zugewandten Ende 16 der Abdeckhaube 6. Mit anderen Worten erstreckt sich die unterhalb der Stufe 18 befindliche Gutleitfläche 19 bis hin zu dem hinteren Ende 16 der Abdeckhaube 6 vorsprunglos bis zur Stirnseite 22 des Abdeckelements 6. Die untere Gutleitfläche 19 weist eine glatte Oberfläche 21 auf, sodass das Erntegut ungehindert entlang des Kanals 11 an der unteren Gutleitfläche 19 in Richtung der Querfördervorrichtung leitbar ist. Die Abdeckhaube 6 ist spiegelsymmetrisch ausgebildet, wobei die Abdeckhaube 6 beidseitig jeweils eine Stufe 18 umfasst. Unterhalb der jeweiligen Stufe 18 erstrecken sich jeweils eine glatte untere Gutleitfläche 19 und zwischen den zwei Stufen 18 einer Abdeckhaube 6 erstreckt sich eine glatte konvexe obere Gutleitfläche 23. Insgesamt umfasst die Abdeckhaube 6 somit zwei Stufen 18. Hier und vorzugsweise ist die Stufe 18 als flächiger Abschnitt ausgebildet, der eine deutlich höhere Steigung als die unterhalb und oberhalb der Stufe befindlichen Gutleitflächen 19, 23 aufweist.

Die Stufe 18 umfasst einen Steigungsabschnitt 24 und einen sich an den Steigungsabschnitt 24 in einem gemeinsamen Schnittpunkt 25 anschließenden Längsabschnitt 26, wobei sich der Längsabschnitt 26 in Längsrichtung der Abdeckhaube 6 erstreckt. Der Steigungsabschnitt 24 verläuft ausgehend von einem vorderen unteren Bereich schräg nach oben und in Richtung des hinteren Endes 16 der Abdeckhaube 6 ansteigend und bildet hierbei eine dem hinteren Ende 16 der Abdeckhaube 6 zugewandte Fläche aus. Mit vorderen unteren Bereich ist im Sinne der vorliegenden Anmeldung ein nahe der Abdeckspitze 4 und dem unteren Randabschnitt 20 der Abdeckhaube 6 gelegener Bereich zu verstehen. Der Längsabschnitt 26 erstreckt sich ausgehend von dem Schnittpunkt 25 in Richtung des hinteren Endes 16 der Abdeckhaube 6. Der Längsabschnitt 26 ist von einem flächigen, dem Kanal 11 zugewandten Abschnitt gebildet, der einem Hochrutschen des Ernteguts aus dem Kanal 11 entlang der Außenoberfläche 17 der Abdeckhaube 6 entgegenwirkt. Eine Stufenhöhe 27 des Längsabschnitts 26 nimmt ausgehend von dem Knickpunkt 25 in Richtung des hinteren Endes 16 der Abdeckhaube 6 ab, sodass sich am hinteren Ende 16 der Abdeckhaube 6 eine glatte bzw. stufenlose Außenoberfläche 17 ergibt. Im Knickpunkt 25 bilden der Längsabschnitt 26 und der Steigungsabschnitt 24 einen stumpfen Winkel 28 aus.

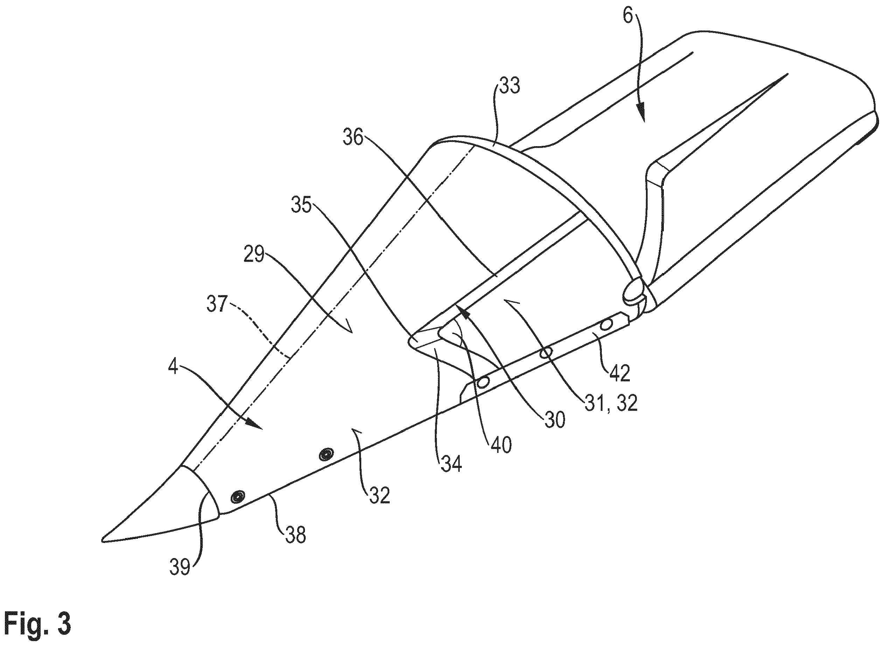

Figur 3 zeigt exemplarisch eine Abdeckspitze 4 und eine hintere Abdeckhaube 6 in einer perspektivischen Ansicht. Die Abdeckspitze 4 ist als zur Mittellinie 37 der Abdeckspitze 4 achsensymmetrisches Hohlprofil ausgeführt und weist in axialer Richtung einen im Wesentlichen bogenförmigen Verlauf ihrer Oberfläche 32 auf. Die Unterseite der Abdeckspitze 4 ist offen ausgeführt und von Randabschnitten 38 begrenzt, welche in einer gemeinsamen horizontalen Ebene liegen. Ausgehend von einem vorderen, dem Maschinenrahmen 3 abgewandten vorderen Ende 39 nimmt der Radius der Abdeckspitze 4 in Richtung des hinteren, dem Maschinenrahmen 3 zugewandten Endes 33 der Abdeckspitze 4 zu, so dass sich ein zumindest abschnittsweise kegelstumpfförmiger Aufbau einstellt.

In der in Figur 3 gezeigten Ausgestaltungsvariante weist die Abdeckspitze 4 zusätzlich zu der Abdeckhaube 6 ebenfalls eine gestufte Außenoberfläche 29 auf. Analog zu der Ausgestaltung der Abdeckhaube 6 erstreckt sich die zwischen der Stufe 30 und dem unteren Randbereich 39 der Abdeckspitze 4 befindliche Gutleitfläche 31 kontinuierlich mit einer glatten Oberfläche 32 bis zu einem der Abdeckhaube 6 zugewandten Ende 33 der Abdeckspitze 4. Die an der Abdeckspitze 4 befindliche Stufe 30 verringert die Auflagefläche des über die Abdeckspitze 4 bei einem Erntevorgang hinweggleitenden Ernteguts, sodass infolge der verringerten mit dem Erntegut in Berührung tretenden Auflagefläche weniger Reibung generiert und das Erntegut mit verringerten Reibwiderstand hin zu den Pflückeinheiten 8 führbar ist.

Hier und vorzugsweise umfasst die Stufe 30 der Abdeckspitze 4 einen Steigungsabschnitt 34 und einen sich an den Steigungsabschnitt 34 in einem gemeinsamen Schnittpunkt 35 anschließenden Längsabschnitt 36, wobei sich der Längsabschnitt 36 in Längsrichtung der Abdeckspitze 4 erstreckt. Der Steigungsabschnitt 34 ist von einer dem hinteren Ende 33 der Abdeckspitze 4 zugewandten Fläche gebildet. Analog zu der Ausgestaltung der Abdeckhaube 6 erstreckst sich der Längsabschnitt 36 der Abdeckspitze 4 ausgehend von dem Schnittpunkt 35 in Richtung des hinteren Endes 33 der Abdeckspitze 4. Der Längsabschnitt 36 ist von einem flächigen Abschnitt gebildet, der einem Hochrutschen des Ernteguts entlang der Außenoberfläche 29 der Abdeckspitze 4 entgegenwirkt. In einem vor der Stufe befindlichen, dem vorderen Ende 39 der Abdeckspitze 4 zugewandten Bereich, wird das Erntegut zunächst von einem stufenlosen Bereich angenommen und anschließend entlang des mit der Stufe 30 versehenen Bereichs geführt. Der Steigungsabschnitt 34 und der Längsabschnitt 36 der an der Abdeckspitze 4 befindlichen Stufe 30 bilden in ihrem Schnittpunkt 35 einen spitzen Winkel 40 aus.

Hier und vorzugsweise ist an der Außenoberfläche 29 der Abdeckspitze 4 angrenzend an den unterhalb der Stufe 30 befindlichen Randabschnitt 32 ein flächiges Verschleißelement 42 angeordnet. Das Verschleißelement 42 erstreckt sich in axialer Richtung und schützt den im Erntebetrieb besonders für Verschleiß anfälligen hinteren Bereich der Abdeckspitze 4. Das Verschleißelement 42 besteht hierfür besonders bevorzugt aus Metall. Die Abdeckspitze 4 ist spiegelsymmetrisch ausgebildet, wobei die Abdeckspitze 4 beidseitig jeweils eine Stufe 30 und ein darunter befindliches Verschleißelement 42 aufweist.

**Bezugszeichenliste:**

| | | | |
|---|---|---|---|
| 1 | Vorsatzgerät | 34 | Steigungsabschnitt |
| 2 | Schrägförderer | 35 | Schnittpunkt |
| 3 | Maschinenrahmen | 36 | Längsabschnitt |
| 4 | Abdeckspitze | 37 | Mittellinie |
| 5 | Abteiler | 38 | Randabschnitt |
| 6 | Abdeckhaube | 39 | Vorderes Ende |
| 7 | Äußere Abdeckhaube | 40 | Winkel |
| 8 | Pflückeinheit | 41 | Konvexe Gutleitfläche |
| 9 | Pflückwalze | 42 | Verschleißelement |
| 10 | Querförderschnecke | | |
| 11 | Kanal | | |
| 12 | Räder | | |
| 13 | Abdeckelement | | |
| 14 | Längsachse | | |
| 15 | Vorderes Ende | | |
| 16 | Hinteres Ende | | |
| 17 | Außenoberfläche | | |
| 18 | Stufe | | |
| 19 | Untere Gutleitfläche | | |
| 20 | Randabschnitt | | |
| 21 | Oberfläche | | |
| 22 | Stirnseite | | |
| 23 | Obere Gutleitfläche | | |
| 24 | Steigungsabschnitt | | |
| 25 | Schnittpunkt | | |
| 26 | Längsabschnitt | | |
| 27 | Stufenhöhe | | |
| 28 | Winkel | | |
| 29 | Außenoberfläche | | |
| 30 | Stufe | | |
| 31 | Gutleitfläche | | |
| 32 | Oberfläche | | |
| 33 | Ende | | |

## Patentansprüche

1. Vorsatzgerät (1) zum Ernten von in Reihen stehendem Erntegut, umfassend mehrere nebeneinander angeordnete Pflückeinheiten (8), welche jeweils durch ein zweiteiliges Abdeckelement (13), welches eine vordere Abdeckspitze (4) und eine hintere Abdeckhaube (6) aufweist, zumindest abschnittsweise abgedeckt sind,
**dadurch gekennzeichnet, dass** die hintere Abdeckhaube (6) eine zumindest abschnittsweise gestufte Außenoberfläche (17) zur Verbreiterung eines zwischen zwei benachbarten Abdeckhauben (6) ausgebildeten Kanals (11) aufweist,
wobei sich die unterhalb einer Stufe (18) der Abdeckhaube (6) befindliche Gutleitfläche (19) kontinuierlich bis zu einem hinteren Ende (16) der Abdeckhaube (6) erstreckt.

2. Vorsatzgerät (1) nach Anspruch 1, **dadurch gekennzeichnet, dass** die Stufe (18) der Abdeckhaube (6) einen Steigungsabschnitt (24) und einen sich an den Steigungsabschnitt (24) in einem gemeinsamen Schnittpunkt (25) anschließenden Längsabschnitt (26) aufweist, wobei sich der Längsabschnitt (26) in Längsrichtung der Abdeckhaube (6) erstreckt.

3. Vorsatzgerät (1) nach Anspruch 2, **dadurch gekennzeichnet, dass** der Steigungsabschnitt (24) und der Längsabschnitt (26) in ihrem Schnittpunkt (25) einen stumpfen Winkel (28) ausbilden.

4. Vorsatzgerät (1) nach einem der Ansprüche 1 bis 3, **dadurch gekennzeichnet, dass** die Abdeckhaube (6) ein hohlzylindrisches, nach unten offenes, von seitlichen Randabschnitten (20) begrenztes Profil aufweist, wobei die Abdeckhaube (6) an gegenüberliegenden Seiten jeweils eine Stufe (18) aufweist, wobei die Stufen (18) derart ausgebildet sind, dass die sich jeweils zwischen einer Stufe (18) und einem Randabschnitt (20) erstreckende Gutleitfläche (19) flacher ausgeführt ist, als eine oberhalb der Stufen (18) befindlicher konvexe Gutleitfläche (41).

5. Vorsatzgerät (1) nach einem der Ansprüche 1 bis 4, **dadurch gekennzeichnet, dass** die vordere Abdeckspitze (4) eine abschnittsweise gestufte Außenoberfläche (29) aufweist, wobei sich eine unterhalb der Stufe (30) der Abdeckspitze (4) befindliche Gutleitfläche (31) kontinuierlich bis zu einem der Abdeckhaube (4) zugewandten Ende (33) der Abdeckspitze (4) erstreckt.

6. Vorsatzgerät (1) nach Anspruch 5, **dadurch gekennzeichnet, dass** die Stufe (30) der Abdeckspitze (4) einen Steigungsabschnitt (34) und einen sich an den Steigungsabschnitt (34) in einem gemeinsamen Schnittpunkt (35) anschließenden Längsabschnitt (36) aufweist, wobei sich der Längsabschnitt (36) in Längsrichtung der Abdeckspitze (4) erstreckt.

7. Vorsatzgerät (1) nach Anspruch 6, **dadurch gekennzeichnet, dass** der Steigungsabschnitt (34) und der Längsabschnitt (36) der an der Abdeckspitze (4) befindlichen Stufe (30) in ihrem Schnittpunkt (35) einen spitzen Winkel (40) ausbilden.

8. Vorsatzgerät (1) nach einem der Ansprüche 1 bis 7, **dadurch gekennzeichnet, dass** die Außenoberfläche (29) der Abdeckspitze (4) an ihren Randabschnitten (32) zumindest ein, vorzugsweise zwei, flächige Verschleißelemente (42) umfasst.
